# EUROPÄISCHE PATENTSCHRIFT

(11) **EP 0 567 980 B1**
(45) Veröffentlichungstag und Bekanntmachung des Hinweises auf die Patenterteilung: **09.07.1997**
(21) Anmeldenummer: 93106764.9
(22) Anmeldetag: 27.04.1993
(51) Int. Cl.: G01B 11/24

(54) **Vorrichtung zur Vermessung von Krümmungsprofilen von Kanten**
Procedure for measuring the curved profile of edges
Procédé pour la détermination des profils courbés d'arêtes

(30) Priorität: 28.04.1992 DE 4213909
(43) Veröffentlichungstag der Anmeldung: 03.11.1993
(73) Patentinhaber: MTU MOTOREN- UND TURBINEN-UNION MÜNCHEN GMBH, D-80976 München (DE)
(72) Erfinder: Satzger, Wilhelm, W-8000 München 40 (DE); Mangold, Edmund, W-8115 Ohlstadt (DE)
(74) Vertreter: Baum, Wolfgang, Dipl.-Ing.

(56) Entgegenhaltungen:
- EP-A- 0 313 193
- EP-A- 0 379 079
- EP-A- 0 387 521
- WO-A-91/05520
- DE-A- 1 926 979
- DE-A- 2 701 858
- DE-A- 3 803 451
- FR-A- 2 620 818

## Beschreibung

Die Erfindung betrifft eine Vorrichtung zur Vermessung von Krümmungsprofilen von Kanten wie Hinterkanten von Triebwerksschaufeln.

Aus der US-PS 4, 709,156 ist ein Verfahren und eine Vorrichtung zur Inspektion von gekümmten Oberflächen wie Triebwerksschaufelblättern bekannt. In der bekannten Vorrrichtung tastet ein Laserstrahl die schwach gekrümmte Oberfläche ab und der von der Oberfläche reflektierte Laserstrahl wird auf eine Detektorzeile zur Erfassung des Krümmungsprofils projeziert. Diese Vorrichtung hat den Nachteil, daß sie nur schwach gekrümmte Oberflächen erfassen kann.

Aus der EP 0 379 079 A1 ist eine Vorrichtung zur Vermessung von Krümmungsprofilen von Kanten bekannt, mit Mitteln zur Beleuchtung eines Objekts mit einem Lichtbündel mit über dessen Querschnitt periodisch variierenden Helligkeitsverteilung und zur Modulation der Phasen der Helligkeitsverteilung des Lichtbündels. Bei dieser vorbekannten Vorrichtung sind eine lichteleketrische Detektoranordnung zur Erfassung der Helligkeitswerte für eine Anzahl unterschiedlicher Modulationsphasen und Periodenlängen und Mittel zur Verknüpfung der erfaßten Helligkeitswerte zur Ermittlung der Restphasenwerte innerhalb der Perioden der Helligkeitsverteilung für definierte Phasenlagen vorgesehen, wobei die Mittel zur Beleuchtung und zur Modulation mehrere lineare parallele Strichgitter mit unterschiedlichen Periodenlängen umfassen und auf einem gemeinsamen Träger mit Referenzmarken angeordnet sind. Zur definierten Verschiebung des gemeinsamen Trägers umfaßt die Vorrichtung Mittel, die die linearen Strichgitter derart verschieben, daß die entsprechenden Helligkeitsverteilungen der Objektfläche die erforderlichen Phasenlagen aufweisen. Diese bekannte Vorrichtung kann nicht zur Vermessung von Krümmungsprofilen von Werkstücken eingesetzt werden, die eine Oberfläche aufweisen, bei der der Winkel des einfallenden Strahles dem Winkel des reflektierten Strahles entspricht (klassisches Reflexionsgesetz). Derartige metallisch glänzende Oberflächen liegen vor allem bei Turbinenschaufeln vor, Demnach kann die Vorrichtung, die auf der Lichtsteuung oder einer diffusen Reflexion basiert, nicht für "spiegelnd reflektierende" Oberflächen eingesetzt werden.

Ein weiterer Nachteil der bekannten Vorrichtung besteht darin, daß zum Vermessen einer scharfen Kante eine äußerst genaue Fokussierung erforderlich wird, und die Kante genau in der Fokalebene zu plazieren ist, um ein oder zwei Höhenlinien im Empfangsbereich der dort offenbarten Kamera auf der Kante abzubilden.

Aus der DE 27 01 858 A1 ist eine Meßvorrichtung für Abstandsänderungen bekannt, bei der Höhenlinien auf dem Objekt mittels Interferenzstreifen erzeugt werden. Zum Erfassen der Höhenunterschiede sind Oberflächen erforderlich, die eine Lichtstreuung aufweisen (vergl. Fig. 4 der Druckschrift). Bei Oberflächen mit klassischer Reflexion versagt auch diese bekannte Vorrichtung.

Aufgabe der vorliegenden Erfindung ist es, eine Vorrichtung anzugeben die Krümmungsprofile vermessen kann, wie sie an Kanten vorkommen, bei denen Krümmungsradien auftreten, die in der Größenordnung eines Laserstrahlquerschnittes und darunter liegen.

Die gestellte Aufgabe wird von einer Vorrichtung mit den Merkmalen nach Patentanspruch 1 gelöst.

Die erfindungsgemäße Vorrichtung hat den Vorteil, daß mit Hilfe der Strahlungsintensitätsmatrix die Strahlungsintensität über dem Strahlungsquerschnitt örtlich moduliert werden kann und damit der einfallende, das Krümmungsprofil der Kante ausleuchtende Strahl kontinuierlich oder in feinsten Stufen je nach dem intensitätsbestimmenden Muster der Strahlungsintensitätsmatrix markiert wird. Diese Markierung kann durch Erfassung des am Krümmungsprofil durch die Kante reflektierten Strahls von einer Anordnung zur Ermittlung des Krümmungsprofils aus den Reflexionswerten erkannt und zugeordnet werden, wenn an örtlich gleicher Stelle mit mehreren unterschiedlichen Intensitätswerten das Krümmungsprofil der Kante ausgeleuchtet wurde. Die Erfassung des am Krümmungsprofil reflektierten Strahls erfolgt vorteilhaft durch zeilenweise entlang dem Krümmungsprofil angeordnete Bauelemente. Ein besonderer Vorteil besteht darin, daß mit dieser Vorrichtung äußerst scharfe Kanten wie Messerschneiden oder Zerspanungswerkzeugkanten vorzugsweise Triebwerksschaufelkanten auf schnelle und kostengünstige Weise einer Qualitätssicherungsprüfung unterzogen werden können.

Zur Zuordnung des einfallenden durch Strahlungsintensitätsmatrix markierten Laserstrahls zum reflektierten Laserstrahl weist die Anordnung zur Ermittlung des Krümmungsprofils aus den Reflexionswerten vorzugsweise ein Rechenprogramm mit Phasenversetzungs-Algorithmus auf. Mit einem derartigen Rechenbaustein kann vorteilhaft und zuverlässig bereits aus drei Messungen mit unterschiedlichen Intensitätswerten der Strahlungsintensitätsmatrix ein reflektierter Strahlausschnitt einem beleuchtenden Strahlausschnitt zugeordnet werden und der Krümmungsprofilpunkt oder -bereich für diesen markierten Strahlausschnitt ermittelt werden.

Als Strahlungsintensitätsmatrix wird vorzugsweise ein Transmissionsfilter im Laserstrahl angeordnet. Das hat den Vorteil, daß durch mechanisches Verschieben des Transmissionsfilters mehrere unterschiedliche Intensitätswerte über dem Laserstrahlquerschnitt mittels einfacher mechanischer Mittel einstellbar sind.

Dazu weist die Strahlungsintensitätsmatrix vorzugsweise Intensitätswerte auf, die orthogonal oder schräg zur Laserstrahlachse ansteigen oder abfallen, so daß durch mehrere vorteilhaft durch zwei minimale örtliche Verschiebungen der Strahlungsintensitätsmatrix mehrere bzw. drei feinabgestufte unterschiedliche Intensitätswerte den einfallenden das Krümmungsprofil beleuchtenden Laserstrahl bzw. feinabgestufte Laserstrahlausschnitte markieren. Die minimale Verschiebung kann von einer Mikrometerschraube mit Schrittschaltmotorantrieb oder vorzugsweise von einer Piezokeramik ausgelöst werden, womit vorteilhaft eine schnelle und reproduzierbare sowie elektronisch steuerbare Verschiebung verbunden ist.

In einer weiteren bevorzugten Ausbildung der Erfindung weist die Strahlungsintensitätsmatrix einer Winkelfunktion folgende, örtlich einstellbare, unterschiedliche Intensitätswerte auf. Eine derartige Strahlungsintensitätsmatrix läßt sich vorteilhaft ohne photografische oder physikalisch abgeschiedene Einschwärzungen oder Einfärbungen wie sie sonst für ein Transmissionsfilter üblich sind vorzugsweise auf einem halbdurchlässigen Spiegel eines Michelson-Interferometers erzeugen.

Diese bevorzugte Ausbildung der Erfindung weist deshalb ein modifiziertes Michelson-Interferometer mit einem halbdurchlässigen Spiegel auf, an dem zwei kohörentes Licht reflektierende Teilstrahler des Laserstrahls entstehen und sich mittels verstellbarer Teilstrahlspiegel zu einer Strahlungsintensitätsmatrix in Form eines Interferenzbildes auf dem halbdurchlässigen Spiegel überlagern, wobei zur Einstellung mehrerer Intensitätswerte ein erster Teilstrahlspiegel eine Winkelverstellung und ein zweiter Teilstrahlspiegel eine Abstandverstellung aufweist, wobei vorzugsweise eine Piezokeramik die Abstandsverstellung bewirkt. Diese Ausbildung der Erfindung hat den Vorteil, daß sie eine kompakte Bauweise für die Strahlungsintensitätsmatrix anbietet und sich Periodizität und Intensität der Intensitätswerte durch einfache Winkelverstellung des ersten Teilstrahlspiegels und/oder minimale Verschiebungen des Piezokeramik-bewegten zweiten Teilstrahlspiegels präzise und reproduzierbar auf kleinstem Raum einstellen läßt.

Die zeilenweise Anordnung von Bauelementen kann auch in eine flächige Anordnung durch Aneinanderreihung von Zeilen von Bauelementen erfolgen, wenn der Laserstrahl eine großflächige Ausleuchtung zuläßt. Dazu wird vorzugsweise der Laserstrahl optisch im Querschnitt unter Beibehaltung der Parallelität des Laserstrahls aufgeweitet. Mittel zur optischen Aufweitung werden vorzugsweise zwischen Laserstrahler und Strahlungsintensitätsmatrix angeordnet und haben den Vorteil, daß neben einer möglichen flächigen Erfassung besonders die Zeilenbreite vergrößert werden kann.

Zur Erfassung der Reflexionswerte des Laserstrahls werden als Bauelemente photoempfindliche Bauelemente, vorzugsweise Photodioden oder Photowidertandszeilen oder Videokamerazeilen eingesetzt und als Anordnung zur Ermittlung des Krümmungsprofils ein Rechner nachgeschaltet. Eine derartige Ausführung der Vorrichtung hat den Vorteil, daß die Reflexionswerte in örtlicher Nähe der Reflexionsquelle, dem Krümmungsprofil, in elektrisch auswertbare Signale umgesetzt werden und über bewegliche, flexible elektrische Leitungen dem Rechner automatisch eingegeben werden können.

Bei einer weiteren bevorzugten Ausbildung der Erfindung sind die Bauelemente Lichtleitfasern eines Lichtleiters und die Anordnung weist photoempfindliche Bauelemente und einen Rechner auf. Diese Ausbildung der Erfindung hat den Vorteil, daß die erfassenden Bauelemente in hoher Anzahl zeilenweise nebeneinander entlang dem zu vermessenden Krümmungsprofil einer Kante angeordnet werden können und die Zeile um das Krümmungsprofil herumgelegt werden kann, da jede Lichtleitfaser individuell positionierbar ist. In diesem Fall müssen dem Rechner photoempfindliche Bauelemente vorgeschaltet werden, so daß die Anordnung zur Ermittlung des Krümmungsprofil aus den Reflexionswerten photoempfindliche Bauelemente und einen Rechner aufweist.

Zur Erfassung der Reflexionswerte werden als Bauelemente vorzugsweise Spiegel eingesetzt, die den reflektierten Laserstrahl zunächst zeilenweise umlenken und in eine Richtung spiegeln in der photoempfindliche Bauelemente oder Lichtleitfasern angeordnet sind. Diese Anordnung hat den Vorteil, daß Spiegel platzsparender und näher an der Reflexionsquelle, dem Krümmungsprofil, positionierbar sind als photoempfindliche Bauelemente oder Lichtleitfasern.

Zur räumlichen Erfassung des Krümmungsprofils weist eine bevorzugte Ausbildung der Vorrichtung einen Abtastkopf auf, in dem Bauelemente zeilenweise angeordnet sind und einen definierten Abstand zu einer Abtastkante aufweisen und daß Abtastkopf und Abtastkante verschieblich gegenüber dem Krümmungsprofil parallel zur Kante angeordnet sind. Mit dieser Ausbildung der Erfindung kann vorteilhaft der Abtastkopf an dem Krümmungsprofil einer Kante vorbei geführt werden oder umgekehrt, in dem der Abtastkopf bis zu seiner Abtastkante an das Krümmungsprofil herangeführt und mit der Abtastkante an der zu vermessenden Kante entlanggeführt wird. Zeitsynchron verläuft die Auswertung in der Anordnung zur Ermittlung des Krümmungsprofils der Kante aus den Reflexionswerten.

Auf einem Bildschirm kann vorteilhaft zeitsynchron mit der Auswertung die Kante und ihr Krümmungsprofil räumlich dargestellt werden, so daß diese Vorrichtung in der fertigungsbegleitenden Qualitätssicherung einsetzbar wird. Dazu wird vorzugsweise jedem Bauelement des Abtastkopfes ein horizontaler Ausschnitt des reflektierten Laserstrahls zugeordnet, so daß die Ausschnitte über Rechner und Bildschirm zusammengesetzt ein maßgenaues vergrößertes Abbild des Krümmungsprofils der Kante ergibt.

Zur Weiterleitung des reflektierten Laserstrahlausschnitts werden vorzugsweise Lichtleitfaserenden von Lichtleitfasern, die horizontal und rechtwinklig zur scharfen Kante angeordnet sind und dabei das Krümmungsprofil in Form eines bis zu dreivierteln geschlossenen Ringes mit einer Öffnung für den einfallenden Laserstrahl umschließen im Abtastkopf angeordnet. Der Ring ist zum Krümmungsdprofil hin offen und ragt über die Abtastkante des Abtastkopfes hinaus, wodurch das Krümmungsprofil vorteilhaft innerhalb des Ringes beim Meßvorgang positioniert werden kann, was die Meßgenauigkeit und die Auflösung erhöht. Der Abtastkopf kann aufgrund des Einsatzes von Lichtleitfasern äußerst flach gestaltet werden, weil der Ring aus Lichtleitfasern nicht hoch aufbaut.

Bei einer weiteren bevorzugten Ausbildung der Erfindung sind die Lichtleitfasern im Abtastkopf vertikal und parallel zu einer Kante angeordnet und auf einen ringförmig gebogenen Spiegel ausgerichtet, der das Krümmungsprofil als bis zu dreivierteln geschlossener Ring mit einer Öffnung für den einfallenden Laserstrahl umschließt. Diese Öffnung kann als horizontaler Schlitz in der Spiegelfläche ausgebildet sein, wodurch vorteilhaft nur eine Zeile des Krümmungsprofils beleuchtet wird. Diese Öffnung kann als eine Unterbrechung des bis zu dreivierteln geschlossenen Rings ausgebildet sein, wodurch sich der Ring in zwei Teile gliedert, zwischen denen der Laserstrahl auf das zu beleuchtende Krümmungsprofil geführt wird.

Zur Erfassung der im Bereich der Öffnung reflektierten Laserstrahlanteile werden vorzugsweise weitere Lichtleitfasern im Abtastkopf angeordnet. Die weiteren Lichtleitfasern können zeilenweise beiderseits des einfallenden Laserstrahls im Abtastkopf hinter dem Ring aus Lichtleitfaserenden oder Spiegeln angeordnet sein. Diese Ausbildung der Erfindung hat den Vorteil, daß kein Punkt des Krümmungsprofils bei der Erfassung und Ermittlung unberücksichtigt bleibt.

Der ringförmig gebogene Spiegel ist gleichzeitig winklig ausgebildet, so daß er den reflektierten Laserstrahl von einer zeilenweisen horizontalen Richtung in die Richtung der Lichtleitfasern umlenkt. In diesem Fall ist der Abtastkopf nicht flach ausgebildet, sondern umfaßt das zu vermessende Krümmungsprofil zangenartig. Die Lichtleitfaserenden sind bei dieser vertikalen nach unten zeigenden Anordnung vorteilhaft vor Verschmutzung geschützt und lediglich der preiswerte ringförmig gebogene Spiegel muß bei Verschmutzung ausgewechselt werden. Um den Verschmutzungsschutz weiter zu verbessern kann eine Schutzscheibe zwischen Spiegel und Lichtleitfaserenden angeordnet werden, so daß der Abtastkopf als hermetisch mit Schutzgas gefüllte, gekapselte und staubfreie Einheit ausbildbar ist.

Als Laserstrahler weist die Vorrichtung vorzugsweise einen Halbleiterlaser auf. Einerseits bieten Halbleiterlaser den Vorteil eines geringen Bauvolumens und andererseits können Halbleiterlaser als Halbleiterlaserzeile so ausgebildet werden, daß sie das Krümmungsprofil ohne vorgeschaltete Blenden oder Schlitze zeilenweise ausleuchten.

Zur Vermeidung einer optischen Bank für die Ausrichtung eines Laserstrahls auf das zu vermessende Krümmungsprofil ist vorzugsweise ein Lichtleitfaserbündel zwischen Laserstrahler und Abtastkopf angeordnet. Das hat den Vorteil, daß nur flexible Zuleitungen zum Abtastkopf eingesetzt werden und der Abtastkopf in allen Raumrichtungen dem Verlauf der scharfen Kante folgen kann.

Eine weitere Verbesserung wird erreicht, wenn vorzugsweise die Strahlungsintensitätsmatrix als Transmissionsfilter oder als modifiziertes Michelson-Interferometer im Abtastkopf angeordnet ist. In diesem Fall wird die Strahlungsintensitätsmatrix dem Lichtleitfaserbündel für den Laserstrahl nachgeordnet und vorteilhaft eine sehr kompakte Bauweise für den Abtastkopf erreicht.

Halbleiterlaser bauen in Spezialanfertigungen so klein, daß sie in einer bevorzugten Ausbildung der Erfindung im Abtastkopf angeordnet werden können, womit vorteilhaft eine optische Bank oder ein Lichtleitfaserbündel zur Ausrichtung des Laserstrahls auf das Krümmungsprofil vermieden werden kann. Damit wird gleichzeitig die Komplexität und Kompaktheit des Abtastkopfes erhöht und die Handhabbarkeit der gesamten Vorrichtung verbessert, da jede Nachjustage oder Feineinstellung außerhalb des Abtastkopfes entfällt.

Die folgenden Figuren zeigen Ausführungsbeispiele der Vorrichtung.
- Fig. 1: zeigt eine Vorrichtung zur Vermessung von Krümmungsprofilen von Kanten mit einem Abtastkopf,
- Fig. 2: zeigt den Abtsastkopf aus Fig. 1 im Querschnitt,
- Fig. 3: zeigt eine Vorrichtung mit einem Abtastkopf, der als integralen Bestandteil ein modifiziertes Michelson-Interferometer aufweist,
- Fig. 4: zeigt den Abtastkopf der Fig. 3 in Draufsicht.

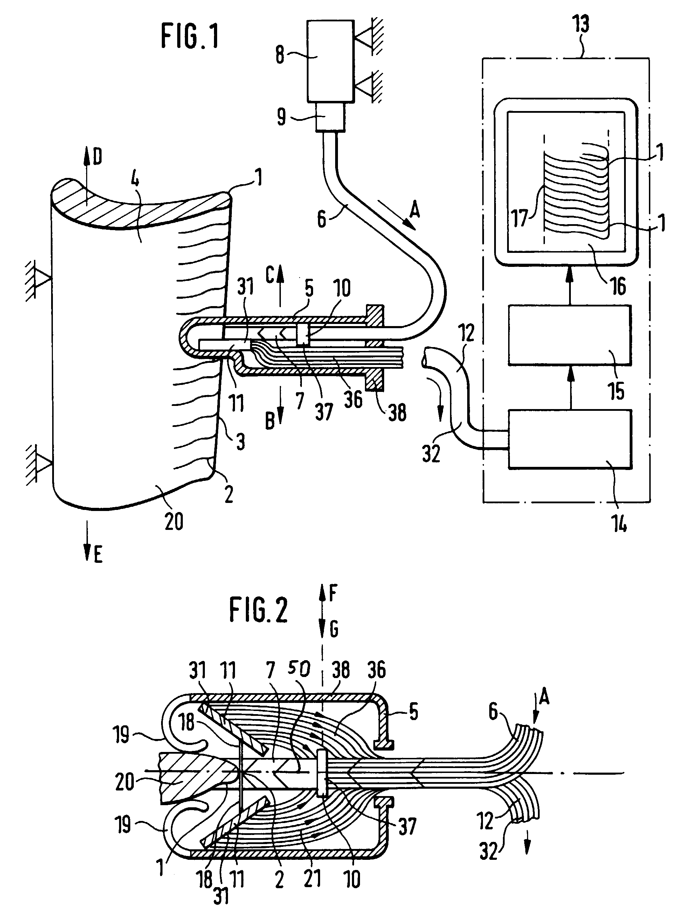

Fig. 1 zeigt eine Vorrichtung zur Vermessung von Krümmungsprofilen 1 von Kanten 2 wie Hinterkanten 3 von Triebwerksschaufeln 4 mit einem Abtastkopf 5, dem über ein Lichtleitfaserbündel 6 in Pfeilrichtung A ein Laserstrahl 7 eines Laserstrahlers 8 zur Beleuchtung des Krümmungsprofils 1 zugeführt wird. Zur Aufweitung des Laserstrahls 7 ist in diesem Ausführungsbeispiel zwischen Laserstrahler 8 und Lichtleitfaserbündel 6 ein optisches Mittel 9 angeordnet.

Zwischen Laserstrahler 8 und Krümmungsprofil 1 ist als Strahlungsintensitätsmatrix (37), die örtlich unterschiedliche Intensitätswerte aufweist, ein Transmissionsfilter 10 im Abtastkopf 5 angeordnet.

Zur Erfassung der Reflexionswerte des Laserstrahls 7 sind entlang dem Krümmungsprofil 1 der scharfen Kante 2 Bauelemente 11 zeilenweise angeordnet, die über ein elektrisches Leitungsbündel 12 mit einer Anordnung 13 zur Ermittlung des Krümmungsprofils 1 aus den Reflexionswerten des Laserstrahls 7 an der Kante 2 in Wirkverbindung stehen.

Diese Bauelemente 11 können Photowiderstands- oder Photodioden- oder Videokamerazeilen oder zeilenweise angeordnete Lichtleitfasern sein.

Die Anordnung besteht aus einem Umsetzer 14 der die optischen oder elektrischen Signale der Bauelemente 11 in Eingangssignale für einen Rechner 15 umsetzt. Dieser Rechner weist zur Ermittlung des Krümmungsprofils 1 aus den Reflexionswerten des Laserstrahls 7 an der Kante 2 ein Rechnerprogramm mit einem Phasenversetzungs-Algorithmus auf. Das Ergebnis wird in einer Anzeigeneinheit 16 dargestellt. Diese Anzeigeneinheit 16 kann mit einem Bildschirm, einem Drucker und/oder einem Plotter zur graphischen oder numerischen Dokumentation des Krümmungsprofilverlaufs ausgestattet sein.

In diesem Beispiel wurde der Abtastkopf 5 in Pfeilrichtung B oder C an der scharfen Kante 2 zeilenweise entlanggeführt und ein dreidimensionales Bild 17 der Krümmungsprofile 1 auf der Anzeigeneinheit 16 erzeugt. An Stelle des Abtastkopfes 5 kann auch die zu vermessende Kante 2 in den Pfeilrichtungen E oder D am Abtastkopf 5 entlang geführt werden, um eine derartige Vermessung der Krümmungsprofile 1 zu erreichen.

Fig. 2 zeigt den Abtastkopf 5 aus Fig. 1 im Querschnitt. Das Lichtleitfaserbündel 6 leitet den einfallenden Laserstrahl auf das Transmissionsfilter 10, das zwischen Laserstrahler (Pos. 8 Fig. 1) und Krümmungsprofil 1 angeordnet ist. Zur eindeutigen Zuordnung eines einfallenden Laserstrahlausschnitts zu einem am Krümmungsprofil reflektierten Laserstrahlausschnitt sind mehrere Strahlungsintensitätswerte mit Hilfe des Transmissionsfilters 10 einzustellen. Dazu wird das Transmissionsfilter 10 im Abtastkopf (5) mechanisch in beispielsweise 3 verschiedene Stellungen durch Verschieben in den Pfeilrichtugnen F oder G verstellt. Diese Verstellmechanik wird von einer Piezokeramik angetrieben.

Zur Führung des Abtastkopfes 5 entlang der scharfen Kante weist der Abtastkopf 5 eine Abtastkante 18 auf. Die zeilenweise angeordneten Bauelemente 11 zur Erfassung der Reflexionswerte ragen über diese Abtastkante 18 hinaus, so daß sie das Krümmungsprofil 1 beidseitig einschließen. Außerhalb des Meßbereichs für das Krümmungsprofils 1 sind seitlich am Meßobjekt 20 gleitend Führungsfedern 19 angeordnet. Signalfasern 21 der Bauelemente 11 werden zu einem Leitungsbündel 12 zusammengefaßt, das die Wirkverbindung zur Anordnung 13 herstellt.

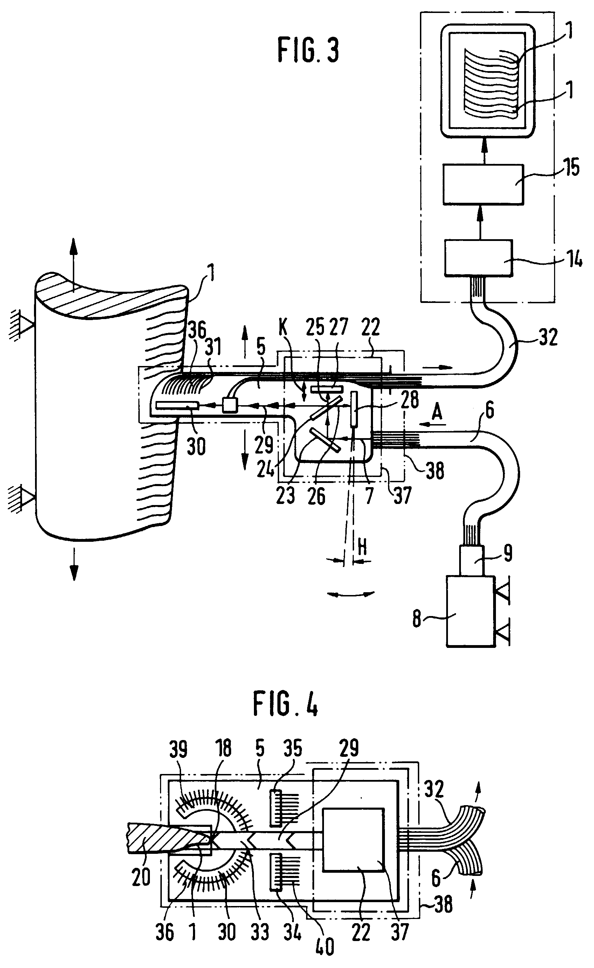

Fig. 3 zeigt eine Vorrichtung mit einem Abtastkopf 5, der als integralen Bedstandteil ein modifiziertes Michelson-Interferrometer 22 aufweist. In das Michelson-Interferometer können optische Mittel zur Aufweitung des Laserstrahls eingebaut werden oder es werden wie in diesem Beispiel optische Mittel 9 zur Aufweitung des Laserstrahls dem Laserstrahler 8 nachgeschaltet. Der Laserstrahler 8 sendet über das Lichtleitfaserbündel 6 einen Laserstrahl 7 über einen Umlenkspiegel 23 auf einen halbdurchlässigen Spiegel 24, der als Strahlungsintensitätsmatrix dient. Der halbdurchlässige Spiegel 24 erzeugt zwei kohärente Teilstrahlen 25 und 26, die von zwei Teilstrahlspiegeln 27 und 28 auf den halbdurchlässigen Spiegel 24 reflektiert werden und durch Überlagerung unter einem Winkel H in der Ebene des halbdurchlässigen Spiegels 24 eine Interferenzmatrix als Strahlungsintensitätsmatrix bilden. Die für die Vermessung des Krümmungsprofils erforderlichen unterschiedlichen Intensitätswerte lassen sich einerseits durch unterschiedliche Winkel H am Teilstrahlspiegel 28 oder durch minimale Verschiebungen des Teilstrahlspiegels 27 in Pfeilrichtung K reproduzierbar einstellen. Als Antrieb für die Verstellungen der Teilspiegel werden in diesem Beispiel Piezokeramiken eingesetzt.

Der modulierte Laserstrahl 29 beleuchtet das Krümmungsprofil 1. Die reflektierten Laserstrahlen werden von einem Spiegel 30 in die Vertikale umgelenkt und von den über dem Spiegel 30 angeordneten Lichtleitfaserenden 31 über ein Lichtleitfaserbündel 32 der Anordnung 13 zur Ermittlung des Krümmungsprofils 1 aus den Reflexionsdaten zugeführt. In der Anordnung 13 wird zunächst in einem Umsetzer 14, der in diesem Beispiel eine photoempfindliche Videokamerazeile aufweist das Lichtsignal in ein Rechnereingangssignal umgesetzt und dann dem Rechner 15 zugeführt, der eine Anzeigeeinheit zur Abbildung des Krümmungsdprofils 1 mit ausgewerteten Meßdaten versorgt.

Fig. 4 zeigt den Abtastkopf 5 der Fig. 3 in Draufsicht. Der Abtastkopf 5 weist ein modifiziertes Michelson-Interferrometer 22 auf und einen ringförmigen Spiegel 30. Der Spiegel 30 hat die Form eines bis zu dreivierteln seines Umfangs geschlossenen Ringes 39. Der Reflektor des Spiegels 35 ist beispielsweise auf 45° gegenüber der Zeilenebene angewinkelt, so daß die reflektierten Laserstrahlen in die Vertikale umgelenkt werden. In diesem Spiegel 30 ist eine Öffnung 33 angeordnet durch die der Laserstrahl 29 das Krümmungsprofil 1 mit moduliertem Licht beleuchten kann.

Eine Abtastkante 18 ist im Abtastkopf 5 so angeordnet, daß der zum Meßobjekt 20 hin geöffnete Ringspiegel 33 das Krümmungsprofil 1 weitgehend umschließt. Zur Erfassung der Reflektionswerte über der Öffnung 33 sind weitere Lichtleitfaserzeilen 34 und 35 beiderseits des einfallenden modulierten Laserstrahls 29 angeordnet. Alle Lichtleitfasern 36 werden im Abtastkopf 5 zu einem Lichtleitfaserbündel 32 zusammengefaßt.

## Patentansprüche

1. Vorrichtung zur Vermessung von Krümmungsprofilen von Kanten wie Hinterkanten von Triebwerksschaufeln mittels Laserstrahler mit einem zwischen Krümmungsprofil (1) und Laserstrahler (8) angeordneten verstellbaren Transmissionsfilter (10) oder einem Interferrometer (22), das quer zur Laserachse (50) ansteigende oder abfallende Intensitätswerte zur Markierung von Ausschnitten des Laserstrahls für eine eindeutige Zuordnung zwischen den unter einem Winkel einfallenden und einem entsprechenden Winkel reflektierten Ausschnitten aufweist und quer zur Laserachse (50) angeordnet ist und mit Bauelementen (11), die zur Erfassung der Reflexionswerte der Ausschnitte des Laserstrahls (7) entlang dem Krümmungsprofil (1) der Kante (2) zeilenweise in einem Abtastkopf (5) angeordnet sind, und die das Krümmungsprofil (1) bis zu dreivierteln eines geschlossenen Ringes (39) mit einer Öffnung (33) für den einfallenden Laserstrahl umschließen und mit einer Anordnung (13) zur Ermittlung des Krümmungsprofiles (1) aus den Reflexionswerten in Wirkverbindung stehen.

2. Vorrichtung nach Anspruch 1, dadurch gekennzeichnet, daß die Bauelemente (11) photoempfindliche Bauelemente, vorzugsweise Photodioden- oder Photowiderstandszeilen oder Videokamerazeilen sind und die Anordnung (13) zur Ermittlung des Krümmungsprofils (1) einen Rechner (15) aufweist.

3. Vorrichtung nach einem der Ansprüche 1 oder 2, dadurch gekennzeichnet, daß die Bauelemente (11) Lichtleitfasern (36) eines Lichtleiters (32) sind und die Anordnung (13) einen Umsetzer (14) mit photoempfindlichen Bauelementen und einem Rechner (15) aufweist.

4. Vorrichtung nach einem der Ansprüche 1 bis 3, dadurch gekennzeichnet, daß die Bauelemente (11) zeilenweise reflektierende Spiegel (30) zur Umlenkung des reflektierten Laserstrahls (7) in Richtung nachgeordneter Lichtleitfasern (36) oder photoempfindlicher Bauelemente sind.

5. Vorrichtung nach einem der Ansprüche 1 bis 4, dadurch gekennzeichnet, daß die Anordnung zur Ermittlung des Krümmungsprofils (1) aus den Reflexionswerten ein Rechenprogramm mit Phasenversetzungs-Algorithmus aufweist.

6. Vorrichtung nach einem der Ansprüche 1 bis 5, dadurch gekennzeichnet, daß das Transmissionsfilter (10) oder das Interferometer (22) einer Winkel funktion folgende, örtlich unterschiedliche Intensitätswerte aufweist.

7. Vorrichtung nach einem der Ansprüche 1 bis 6, dadurch gekennzeichnet, daß zur Einstellung mehrerer Transmissionswerte das Transmissionsfilter (10) oder das Interferrometer (22) mit einer Piezokeramik in Wirkverbindung steht.

8. Vorrichtung nach einem der Ansprüche 1 bis 7, dadurch gekennzeichnet, daß das Interferrometer (22) einen halbdurchlässigen Spiegel (24) eines modifizierten Michelson-Interferrometers aufweist, an dem zwei kohärentes Licht reflektierende Teilstrahler des Laserstrahls entstehen und sich mittels verstellbarer Teilstrahlspiegel (27,28) zu einer Strahlungsintensitätsmatrix in Form eines Interferenzbildes auf dem halbdurchlässigen Spiegel (24) überlagern, wobei zur Einstellung mehrerer Intensitätswerte ein erster Teilstrahlspiegel (28) eine Winkelverstellung aufweist und ein zweiter Teilstrahlspiegel (27) eine Piezokeramik.

9. Vorrichtung nach einem der Ansprüche 1 bis 8, dadurch gekennzeichnet, daß sie zur räumlichen Erfassung des Krümmungsprofils (1) einen Abtastkopf (5) aufweist, in dem Bauelemente (11) zeilenweise angeordnet sind und einen definierten Abstand zu einer Abtastkante (18) aufweisen und daß Abtastkopf (5) mit Abtastkante (18) verschieblich gegenüber dem Krümmungsprofil (1) parallel zur Kante (2) angeordnet sind.

10. Vorrichtung nach einem der Ansprüche 1 bis 9, dadurch gekennzeichnet, daß jedem Bauelement (11) des Abtastkopfes (5) ein horizontaler Ausschnitt des reflektierten Laserstrahls (7) zugeordnet ist.

11. Vorrichtung nach einem der Ansprüche 1 bis 10, dadurch gekennzeichnet, daß die Bauelemente (11) im Abtastkopf (5) zur Weiterleitung des reflektierenden Laserstrahlausschnitts Lichtleitfaserenden (31) von Lichtleitfasern (36) sind, die rechtwinklig zur Kante (2) angeordnet sind.

12. Vorrichtung nach einem der Ansprüche 1 bis 11, dadurch gekennzeichnet, daß die Lichtleitfasern (36) im Abtastkopf (5,38) parallel zur Kante (2) angeordnet sind und auf einen ringförmig gebogenen Spiegel (30) ausgerichtet sind, der das Krümmungsprofil als bis zu dreivierteln geschlossener Ring (39) mit einer Öffnung (33) für den einfallenden Laserstrahl (29) umschließt und winklig angeordnet ist, so daß er den reflektierten Laserstrahl von einer zeilenweisen horizontalen Richtung in die vertikale Richtung der Lichtleitfasern (36) umlenkt.

13. Vorrichtung nach einem der Ansprüche 1 bis 12, dadurch gekennzeichnet, daß im Abtastkopf (5,38) weitere Lichtleitfasern (40) zur Erfassung des Laserstrahlanteils, der durch die Öffnung (33) für den einfallenden Laserstrahl (7) reflektiert wird, angeordnet sind.

14. Vorrichtung nach einem der Ansprüche 1 bis 13, dadurch gekennzeichnet, daß der Laserstrahler (8) ein Halbleiterlaser ist.

15. Vorrichtung nach einem der Ansprüche 1 bis 14, dadurch gekennzeichnet, daß zwischen Laserstrahler (8) und Transmissionsfilter (10) oder Interferrometer (22) eine optische Laserstrahlaufweitung (9) angeordnet ist.

16. Vorrichtung nach einem der Ansprüche 1 bis 15, dadurch gekennzeichnet, daß ein Lichtleitfaserbündel (6) zwischen Laserstrahler (8) und Abtastkopf (5,38) angeordnet ist.

17. Vorrichtung nach einem der Ansprüche 1 bis 16, dadurch gekennzeichnet, daß der Halbleiterlaser (8) im Abtastkopf (5,38) angeordnet ist.

18. Vorrichtung nach einem der Ansprüche 1 bis 17, dadurch gekennzeichnet, daß ein modifiziertes-Michelson-Interferrometer (23) im Abtastkopf (5,38) angeordnet ist.

## Claims

1. A device for measuring curved profiles of edges such as trailing edges of engine blades using a laser emitter, comprising an adjustable transmission filter (10) or an interferometer (22), positioned between the curved profile (1) and the laser emitter (8), which has rising or falling intensity values across the laser axis (50) for differentiating portions of the laser beam so as to unambiguously correlate the portions incident at an angle and reflected at a corresponding angle, and which is arranged across the laser axis (50), and comprising components (11) which are arranged line by line in a scanning head (5) to detect the reflection values of the portions of the laser beam (7) along the curved profile (1) of the edge (2), and which surround the curved profile (1) up to three-quarters of a closed ring (39) with an opening (33) for the incident laser beam and are in operative connection with an arrangement (13) for determining the curved profile (1) from the reflection values.

2. A device according to claim 1, characterised in that the components (11) are photosensitive components, preferably photodiode- or photo resistor lines or video camera lines, and the arrangement (13) to determine the curved profile (1) has a computer (15).

3. A device according to one of claims 1 or 2, characterised in that the components (11) are optical fibres (36) of a light guide (32) and the arrangement (13) has a converter (14) with photosensitive components and a computer (15).

4. A device according to one of claims 1 to 3, characterised in that the components (11) are line-by-line reflecting mirrors (30) for deflecting the reflected laser beam (7) in the direction of optical fibres (36) or photosensitive components positioned downstream thereof.

5. A device according to one of claims 1 to 4, characterised in that the arrangement to determine the curved profile (1) from the reflection values has a computer programme with a phase-shift algorithm.

6. A device according to one of claims 1 to 5, characterised in that the transmission filter (10) or the interferometer (22) has locally varying intensity values satisfying an angular function.

7. A device according to one of claims 1 to 6, characterised in that to set several transmission values, the transmission filter (10) or the interferometer (22) is in operative connection with piezoelectric ceramics.

8. A device according to one of claims 1 to 7, characterised in that the interferometer (22) has a semitransparent mirror (24) of a modified Michelson interferometer, at which two partial emitters of the laser beam which reflect coherent light are formed and are superimposed on one another by means of adjustable partial beam mirrors (27, 28) to form a radiation intensity matrix in the form of an interference pattern on the semitransparent mirror (24), wherein, in order to set several intensity values, a first partial beam mirror (28) has an angular adjustment and a second partial beam mirror (27) has piezoelectric ceramics.

9. A device according to one of claims 1 to 8, characterised in that it has a scanning head (5) to detect the curved profile (1) three-dimensionally, in which components (11) are arranged line by line and are located at a defined distance from a scanning edge (18), and in that the scanning head (5) with the scanning edge (18) are [sic - is] arranged so as to be movable relative to the curved profile (1) parallel to the edge (2).

10. A device according to one of claims 1 to 9, characterised in that a horizontal portion of the reflected laser beam (7) is correlated with each component (11) of the scanning head (5).

11. A device according to one of claims 1 to 10, characterised in that the components (11) in the scanning head (5) for passing on the reflected laser beam portion are optical fibre ends (31) of optical fibres (36) which are arranged at right-angles to the edge (2).

12. A device according to one of claims 1 to 11, characterised in that the optical fibres (36) in the scanning head (5, 38) are arranged parallel to the edge (2) and are aligned onto a circularly curved mirror (30) which encloses the curved profile in the form of up to three-quarters of a closed ring (39) with an opening (33) for the incident laser beam (29) and is arranged at an angle, so that it redirects the reflected laser beam from a line-by-line horizontal direction into the vertical direction of the optical fibres (36).

13. A device according to one of claims 1 to 12, characterised in that further optical fibres (40) are arranged in the scanning head (5, 28) to detect the portion of the laser beam which is reflected through the opening (33) for the incident laser beam (7).

14. A device according to one of claims 1 to 13, characterised in that the laser emitter (8) is a semiconductor laser.

15. A device according to one of claims 1 to 14, characterised in that an optical laser beam expander (9) is arranged between the laser emitter (8) and the transmission filter (10) or interferometer (22).

16. A device according to one of claims 1 to 15, characterised in that an optical fibre bundle (6) is arranged between the laser emitter (8) and the scanning head (5, 38).

17. A device according to one of claims 1 to 16, characterised in that the semiconductor laser (8) is arranged in the scanning head (5, 38).

18. A device according to one of claims 1 to 17, characterised in that a modified Michelson interferometer (23) is arranged in the scanning head (5, 38).

## Revendications

1. Dispositif pour mesurer ou faire le relevé de profils de courbure d'arêtes tels que les bords de fuite de pales ou d'aubes de moteurs à l'aide de générateurs laser, comprenant un filtre de transmission (10) ou un interféromètre (22), réglable, prévu entre le profil de courbure (1) et le générateur de faisceau laser (8), et qui donne des valeurs d'intensité croissantes ou décroissantes transversalement à l'axe (50) du laser pour marquer des segments du faisceau laser permettant une association biunivoque entre les segments incidents sous un certain angle et les segments réfléchis sous un angle correspondant, transversalement à l'axe (50) du laser, ainsi que des composants (11) coopérant pour détecter les valeurs de réflexion des segments du faisceau laser (7) le long du profil de courbure (1) de l'arête (2), en étant prévus ligne par ligne dans la tête de détection (5), et le profil de courbure (1) étant entouré sur trois quarts, par un anneau fermé (39) ayant une ouverture (33) pour le faisceau laser incident et un dispositif (13) pour déterminer le profil de courbure (1) à partir des valeurs de réflexion.

2. Dispositif selon la revendication 1,
caractérisé en ce que
les composants (11) sont des composants photosensibles, de préférence des lignes de photodiodes ou de photorésistances ou des lignes de caméras vidéo, et le dispositif (13) comporte un calculateur (15) pour déterminer le profil de courbure (1).

3. Dispositif selon l'une des revendications 1 ou 2,
caractérisé en ce que
les composants (11) sont les fibres optiques (36) d'un guide de lumière (32) et le dispositif (13) comporte un convertisseur (14) à composants photosensibles et calculateur (15).

4. Dispositif selon l'une des revendications 1 à 3,
caractérisé en ce que
les composants (11) sont des miroirs (30) réfléchissant ligne par ligne pour dévier le faisceau laser réfléchi (7) en direction des fibres optiques (36) en aval, ou des composants photosensibles.

5. Dispositif selon l'une des revendications 1 à 4,
caractérisé en ce que
la disposition pour déterminer le profil de courbure (1) à partir des valeurs de réflexion comprend un programme de calcul avec un algorithme de déphasage.

6. Dispositif selon l'une des revendications 1 à 5,
caractérisé en ce que
le filtre de transmission (10) ou l'interféromètre (22) présente des valeurs d'intensité localement différentes suivant une fonction angulaire.

7. Dispositif selon l'une des revendications 1 à 6,
caractérisé en ce que
pour régler plusieurs valeurs de transmission, le filtre de transmission (10) ou l'interféromètre (22) coopère avec une céramique piézo-électrique.

8. Dispositif selon l'une des revendications 1 à 7,
caractérisé en ce que
l'interféromètre (22) comporte un miroir semi-transparent (24) d'un interféromètre de Michelson, modifié, formant deux générateurs de faisceaux partiels du faisceau laser, donnant des faisceaux réfléchis de lumière cohérente et qui se combinent à l'aide d'un miroir à faisceaux partiels réglables (27, 28) en une matrice d'intensité de rayonnement sous la forme d'une image d'interférences sur le miroir semi-transparent (24), et pour le réglage de plusieurs valeurs d'intensité, un premier miroir à faisceau partiel (28) offre un réglage d'angle et un second miroir à faisceau partiel (27) comporte une piézo-céramique.

9. Dispositif selon l'une des revendications 1 à 8,
caractérisé en ce qu'
il comporte une tête de détection (5) pour la détection dans l'espace du profil de courbure (1), tête dans laquelle sont prévus ligne par ligne des composants (11) qui ont une distance déterminée par rapport à une arête de détection (18), la tête de détection (5) avec l'arête de détection (18) étant montée de manière mobile par rapport au profil de courbure (1), parallèlement à l'arête (2).

10. Dispositif selon l'une des revendications 1 à 9,
caractérisé en ce qu'
à chaque composant (11) de la tête de détection (5) est associé un segment horizontal du faisceau laser réfléchi (7).

11. Dispositif selon l'une des revendications 1 à 10,
caractérisé en ce que
les composants (11) sont montés dans la tête de détection (5) pour transmettre le segment de faisceau laser réfléchi, et des extrémités de fibres optiques (31) des fibres (36) sont prévues dans une direction perpendiculaire par rapport à l'arête (2).

12. Dispositif selon l'une des revendications 1 à 11,
caractérisé en ce que
les fibres optiques (36) de la tête de détection (5, 38) sont réparties parallèlement à l'arête (2) et sont alignées vers un miroir (30) cintré en forme d'anneau, entourant le profil de courbure suivant un anneau fermé (39) correspondant à trois quarts et ayant une ouverture (33) pour le faisceau laser incident (29), le montage étant à l'équerre pour que le faisceau laser réfléchi soit dévié d'une direction horizontale, ligne par ligne, vers la direction verticale des fibres optiques (36).

13. Dispositif selon l'une des revendications 1 à 12,
caractérisé en ce que
d'autres fibres optiques (40) sont prévues dans la tête de détection (5, 38) pour détecter la composante de fibres optiques réfléchie par l'ouverture (33) du faisceau laser incident (7).

14. Dispositif selon l'une des revendications 1 à 13,
caractérisé en ce que
le générateur laser (8) est un laser à semi-conducteur.

15. Dispositif selon l'une des revendications 1 à 14,
caractérisé par
un moyen d'étalement optique de faisceau laser (9) prévu entre le faisceau laser (8) et le filtre de transmission (10) ou l'interféromètre (22).

16. Dispositif selon l'une des revendications 1 à 15,
caractérisé par
un faisceau de fibres optiques (6) prévu entre le générateur laser (8) et la tête de détection (5, 38).

17. Dispositif selon l'une des revendications 1 à 16,
caractérisé en ce que
le laser à semi-conducteur (8) est prévu dans la tête de détection (5, 38).

18. Dispositif selon l'une des revendications 1 à 17,
caractérisé en ce qu'
un interféromètre de Michelson (23), modifié, est prévu dans la tête de détection (5, 38).
